# FASCICULE DE BREVET EUROPEEN

(11) **EP 3 233 538 B1**
(45) Date de publication et mention de la délivrance du brevet: **06.02.2019**
(21) Numéro de dépôt: 15813432.0
(22) Date de dépôt: 18.12.2015
(51) Int. Cl.: B60C 1/00, C08K 3/04, C09J 153/02, B29D 30/00, B60C 23/00, C08L 53/02

(54) **PNEUMATIQUE PRÊT À RECEVOIR UN ORGANE À SA SURFACE**
REIFEN MIT BEREITSCHAFT ZUR AUFNAHME EINES ELEMENTS AUF SEINER OBERFLÄCHE
TYRE READY TO RECEIVE A MEMBER ON THE SURFACE THEREOF

(30) Priorité: 19.12.2014 FR 1462954
(43) Date de publication de la demande: 25.10.2017
(73) Titulaire: Compagnie Générale des Etablissements Michelin, 63000 Clermont-Ferrand (FR)
(72) Inventeur: CUSTODERO, Emmanuel, 63040 Clermont-Ferrand Cedex 9 (FR); LEMAL, Vincent, 63040 Clermont-Ferrand Cedex 9 (FR); GAUTHIER, Catherine, 63040 Clermont-Ferrand Cedex 9 (FR)
(74) Mandataire: Louret, Sylvain
(86) Numéro de dépôt international: PCT/EP2015/080418
(87) Numéro de publication internationale: WO 2016/097257

(56) Documents cités:
- WO-A1-99/62998
- WO-A1-2011/047791
- FR-A1- 2 929 076
- FR-A1- 3 002 879
- FR-A1- 3 003 506

## Description

### Domaine de l'invention

La présente invention est relative aux pneumatiques, et plus particulièrement aux pneumatiques prêts à recevoir un organe, par exemple électronique, fixé à leur surface intérieure et/ou extérieure.

### État de la technique

Le développement récent des systèmes de surveillance des pneumatiques d'un véhicule en roulage (en anglais « Tire Pressure Monitoring Systems » ou « TPMS ») est limité par la difficulté de fixer de façon rapide et durable un objet à la surface d'un pneumatique.

Le document US 2012/0248274 propose un pneumatique comportant une surface intérieure et/ou extérieure avec une zone d'accueil, une couche adhésive disposée sur cette zone d'accueil et un film de protection disposé sur la couche adhésive, dans lequel la couche adhésive est constituée d'un tissu noyé dans un matériau thermoplastique. Après avoir retiré le film de protection de la surface de la couche adhésive, on met en contact la couche adhésive de la zone d'accueil du pneumatique et la couche de fixation de l'organe. La présence du tissu permet une fixation stable de la couche adhésive à la surface du pneumatique lors de la vulcanisation du pneumatique. La couche de fixation de l'organe est aussi constituée d'un matériau thermoplastique et la fixation réversible de l'organe à la surface du pneumatique est assurée par mise en contact des deux couches adhésive et de fixation après ramollissement de celles-ci par chauffage.

Ce document ne donne aucune indication quant à la nature des matériaux thermoplastiques utilisables.

### Description brève de l'invention

L'invention a pour objet un pneumatique similaire caractérisé en ce que la composition de la couche adhésive est à base d'un élastomère thermoplastique à blocs (TPE) comportant un bloc élastomère diénique avec un taux molaire de motifs diéniques relativement à l'ensemble des motifs du bloc élastomère supérieur à 10 %.

L'utilisation d'une telle couche adhésive a l'avantage de permettre une co-réticulation de la couche adhésive et du matériau caoutchouteux de la surface du pneumatique, surface intérieure ou extérieure, lors de la vulcanisation du pneumatique grâce à la présence des doubles liaisons présentes dans les élastomères diéniques. La couche adhésive est ainsi liée de façon stable et durable par co-réticulation à la surface du pneumatique et permet de s'affranchir de la présence d'un tissu.

L'invention a aussi pour objet un organe destiné à être fixé à la surface d'un pneumatique caractérisé en ce que cet organe comprend une couche de fixation dont la composition est à base d'un élastomère thermoplastique à blocs et telle que la force de pelage après mise en joint à une température au-delà des températures de ramollissement des couches adhésive et de fixation est supérieure à 2 N/mm à 60°C.

Selon un mode de réalisation préférentiel, le bloc thermoplastique de l'élastomère thermoplastique de la couche de fixation est de même nature que le bloc thermoplastique de l'élastomère thermoplastique à blocs de la composition de la couche adhésive de la zone d'accueil du pneumatique.

Et selon un mode de réalisation très préférentiel, le TPE de la couche de fixation est identique au TPE de la couche adhésive.

Les solutions de collage ainsi développées sont respectueuses de l'environnement et n'utilisent pas de réticulation chimique irréversible.

De plus, ce mode de fixation procure une grande liberté quant à la géométrie et les fonctions de l'organe du fait de la fixation post vulcanisation.

L'organe peut être un boîtier apte à recevoir un dispositif électronique.

L'organe peut aussi être un dispositif électronique.

Il peut aussi être notamment un marquage ou une décoration.

L'invention a aussi pour objet un ensemble comprenant un pneumatique avec un organe fixé à sa surface par la couche adhésive liée à la couche de fixation.

Un autre objet de l'invention est un procédé de fixation d'un organe avec une couche de fixation à la surface d'un pneumatique avec une couche adhésive protégée par un film de protection disposée sur une zone d'accueil, dans lequel :
- on retire tout ou partie du film de protection ;
- on porte lesdites couche adhésive et couche de fixation à une température supérieure aux températures de ramollissement ou Tg (ou Tf, le cas échéant) desdits élastomères thermoplastiques à blocs ; et
- on met en contact en appliquant une pression la couche de fixation et la couche adhésive.

La fixation de l'organe est ainsi réalisée très rapidement et très simplement. La fixation est effective et durable dès que les températures des couches d'adhésion et de fixation sont redescendues sous les températures de ramollissement ou Tg (ou Tf, le cas échéant) des TPE. Elle a aussi l'avantage d'être totalement réversible.

### Description détaillée de l'invention

Dans la présente description, sauf indication expresse différente, tous les pourcentages (%) indiqués sont des % en masse.

Par « un » on entend « un ou plusieurs », à titre d'exemple, « un élastomère thermoplastique » est équivalent à « un ou plusieurs élastomères thermoplastiques ».

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Les détails de l'invention seront explicités ci-dessous, par la description dans un premier temps, des constituants spécifiques du pneumatique selon l'un des objets de l'invention, puis par la description du mode de fabrication du pneumatique et des tests de caractérisation réalisés.

Le pneumatique selon l'invention a pour caractéristiques essentielles d'être pourvu à une zone d'accueil donnée de sa surface d'une couche adhésive comportant un élastomère thermoplastique et protégée par un film de protection tels que définis ci-après.

### Élastomère thermoplastique (TPE)

Les élastomères thermoplastiques (en abrégé « TPE ») ont une structure intermédiaire entre polymères thermoplastiques et élastomères. Ce sont des copolymères à blocs, constitués de blocs rigides, thermoplastiques, reliés par des blocs souples, élastomères.

L'élastomère thermoplastique utilisé pour la mise en oeuvre de l'invention est un copolymère à blocs dont la nature chimique des blocs thermoplastiques et élastomères peut varier.

### Structure du TPE

La masse moléculaire moyenne en nombre (notée Mn) du TPE est préférentiellement inférieure à 500 000 g/mol, plus préférentiellement inférieure à 400 000 g/mol. En effet, une masse Mn trop élevée peut être pénalisante pour le collage de l'organe ou pour la mise en oeuvre du TPE. En ce qui concerne la valeur minimale on a constaté que la présence de faibles masses Mn (inférieures à 30 000 g/mol) peut être favorable au collage du capteur. Cela peut être obtenu par un TPE dont la distribution de masses moléculaires Mn est large, ou par le mélange de plusieurs TPE de masses moléculaires adaptées.

La masse moléculaire moyenne en nombre (Mn) de l'élastomère TPE est déterminée de manière connue, par chromatographie d'exclusion stérique (SEC). Par exemple dans le cas des élastomères thermoplastiques styréniques, l'échantillon est préalablement solubilisé dans du tétrahydrofuranne à une concentration d'environ 1 g/l ; puis la solution est filtrée sur filtre de porosité 0,45 µm avant injection. L'appareillage utilisé est une chaîne chromatographique « WATERS alliance ». Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales « STYRAGEL » (« HMW7 », « HMW6E » et deux « HT6E »). Le volume injecté de la solution de l'échantillon de polymère est de 100 µl. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène. Les conditions sont adaptables par l'homme du métier.

Pour être de nature à la fois élastomère et thermoplastique, le TPE doit être composé de blocs suffisamment incompatibles (c'est-à-dire différents du fait de leur masse, de leur polarité ou de leur Tg respectives) pour conserver leurs propriétés propres de bloc élastomère ou thermoplastique.

Les TPE peuvent être des copolymères avec un petit nombre de blocs (moins de 5, typiquement 2 ou 3), auquel cas ces blocs ont de préférence des masses élevées, supérieures à 15000 g/mol. Ces TPE peuvent être par exemple des mélanges de copolymères diblocs, comprenant un bloc thermoplastique et un bloc élastomère et de copolymères triblocs avec deux segments rigides reliés par un segment souple. Ces mélanges peuvent être majoritairement diblocs ou triblocs. Usuellement on peut avoir un taux de triblocs compris entre 60 et 80 %. Les segments rigides et souples peuvent être disposés linéairement, en étoile ou branchés. Typiquement, chacun de ces segments ou blocs contient souvent au minimum plus de 5, généralement plus de 10 unités de base (par exemple unités styrène et unités butadiène pour un copolymère blocs styrène/ butadiène/ styrène).

Les TPE peuvent aussi comprendre un grand nombre de blocs (plus de 30, typiquement de 50 à 500) plus petits, auquel cas ces blocs ont de préférence des masses peu élevées, par exemple de 500 à 5000 g/mol, ces TPE seront appelés TPE multiblocs par la suite, et sont un enchaînement blocs élastomères - blocs thermoplastiques.

Selon une première variante, le TPE se présente sous une forme linéaire. Par exemple, le TPE est un mélange de copolymère diblocs : bloc thermoplastique / bloc élastomère et de copolymère triblocs : bloc thermoplastique / bloc élastomère / bloc thermoplastique, c'est-à-dire un bloc élastomère central et de deux blocs thermoplastiques terminaux, à chacune des deux extrémités du bloc élastomère. Également, le TPE multiblocs peut être un enchaînement linéaire de blocs élastomères - blocs thermoplastiques. Les TPE selon cette variante sont favorables pour une bonne adhésion de l'organe.

Selon une autre variante de l'invention, le TPE utile pour les besoins de l'invention se présente sous une forme étoilée à au moins trois branches. Par exemple, le TPE peut alors se composer d'un bloc élastomère étoilé à au moins trois branches et d'un bloc thermoplastique, situé à l'extrémité de chacune des branches du bloc élastomère. Le nombre de branches de l'élastomère central peut varier, par exemple de 3 à 12, et de préférence de 3 à 6. Cette variante de TPE est favorable pour une bonne tenue en température.

Selon une autre variante de l'invention, le TPE se présente sous une forme branchée ou dendrimère. Le TPE peut alors se composer d'un bloc élastomère branché ou dendrimère et d'un bloc thermoplastique, situé à l'extrémité des branches du bloc élastomère dendrimère.

### Nature des blocs élastomères

Les blocs élastomères du TPE pour les besoins de l'invention, peuvent être tous les élastomères diéniques insaturés connus de l'homme de l'art. Ils possèdent généralement une Tg inférieure à 25°C, préférentiellement inférieure à 10°C, plus préférentiellement inférieure à 0°C et très préférentiellement inférieure à -10°C. De manière préférentielle également, la Tg bloc élastomère du TPE est supérieure à -100°C.

Par élastomère (ou indistinctement caoutchouc) « diénique », doit être compris de manière connue un (ou plusieurs) élastomère constitué au moins en partie (i.e., un homopolymère ou un copolymère) d'unités monomères diènes (monomères porteurs de deux doubles liaisons carbone-carbone, conjuguées ou non).

Ces élastomères diéniques peuvent être classés dans deux catégories : « insaturés » ou « saturés ». On entend en général par « essentiellement insaturé », un élastomère diénique issu au moins en partie de monomères diènes conjugués, ayant un taux d'insaturations ou de motifs ou unités d'origine diénique (diènes conjugués) qui est supérieur à 10% (% en moles) ; c'est ainsi que des élastomères diéniques tels que les caoutchoucs butyle n'entrent pas dans la définition précédente et peuvent être notamment qualifiés d'élastomères diéniques « saturés » (taux molaire de motifs d'origine diénique faible ou très faible, par exemple de l'ordre de 4 %, toujours inférieur à 10 %). Dans la catégorie des élastomères diéniques « insaturés » utilisables pour l'invention, on entend ainsi tous les élastomères diéniques ayant un taux molaire d'insaturations ou de motifs d'origine diénique (diènes conjugués) supérieur à 10 % et en particulier les élastomères diéniques « fortement insaturés », c'est-à-dire les élastomères diéniques ayant un taux molaire d'insaturations ou de motifs d'origine diénique (diènes conjugués) qui est supérieur à 50%.

On entend plus particulièrement par élastomère diénique insaturé susceptible d'être utilisé dans les blocs élastomères conformes à l'invention :
(a) tout homopolymère d'un monomère diène conjugué, notamment tout homopolymère obtenu par polymérisation d'un monomère diène conjugué ayant de 4 à 12 atomes de carbone ; et
(b) tout copolymère obtenu par copolymérisation d'un ou plusieurs diènes conjugués entre eux ou avec un ou plusieurs composés vinyle aromatique ayant de 8 à 20 atomes de carbone.

Dans le cas de copolymères du type (b), ceux-ci contiennent de 20 à 99% en poids d'unités diéniques et de 1 à 80% en poids d'unités vinylaromatique.

À titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

À titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Selon un mode de réalisation préférentiel de l'invention, les blocs élastomères du TPE présentent au total, une masse moléculaire moyenne en nombre ("Mn") allant de 25 000 g/mol à 350 000g/mol, de préférence de 35 000 g/mol à 250 000 g/mol de manière à conférer au TPE de bonnes propriétés d'élastomères et une tenue mécanique suffisante et compatible avec l'utilisation comme couche adhésive pour la fixation d'un organe à la surface d'un pneumatique.

Le bloc élastomère peut également être un bloc comprenant plusieurs types de monomères éthyléniques, diéniques ou styréniques tels que définis ci-dessus.

Le bloc élastomère peut également être constitué de plusieurs blocs élastomères tels que définis ci-dessus.

La microstructure des élastomères est déterminée par analyse RMN ¹H, supplée par l'analyse RMN ¹³C lorsque la résolution des spectres RMN du ¹H ne permet pas l'attribution et la quantification de toutes les espèces. Les mesures sont réalisées à l'aide d'un spectromètre RMN BRUKER 500MHz à des fréquences de 500.43 MHz pour l'observation du proton et 125.83MHz pour l'observation du carbone.

Pour les mesures sur des mélanges ou des élastomères non solubles mais ayant la capacité de gonfler dans un solvant, est utilisée une sonde HRMAS 4mm z-grad permettant d'observer le proton et le carbone en mode découplé du proton. Les spectres sont acquis à des vitesses de rotation de 4000Hz à 5000Hz.

Pour les mesures sur des élastomères solubles, est utilisée une sonde RMN liquide permettant d'observer le proton et le carbone en mode découplé du proton.

La préparation des échantillons non solubles est faite dans des rotors remplis avec le matériau analysé et un solvant deutéré permettant le gonflement, en général du chloroforme deutéré (CDCl3). Le solvant utilisé doit toujours être deutéré et sa nature chimique peut être adaptée par l'homme du métier. Les quantités de matériau utilisées sont ajustées de façon à obtenir des spectres avec une sensibilité et une résolution suffisante.

Les échantillons solubles sont mis en solution dans un solvant deutéré (environ 25mg d'élastomère dans 1mL), en général du chloroforme deutéré (CDC13). Le solvant ou coupage de solvant utilisé doit toujours être deutéré et sa nature chimique peut être adaptée par l'homme du métier.

Dans les deux cas (échantillon soluble ou échantillon gonflé):
Pour la RMN du proton est utilisée une séquence simple impulsion de 30°. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative.

Pour la RMN du carbone est utilisée une séquence simple impulsion 30° avec un découplage du proton uniquement pendant l'acquisition pour éviter les effets « Overhauser Nucléaire » (NOE) et rester quantitatif. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative.

Les mesures sont réalisées à 25°C.

### Nature des blocs thermoplastiques

On utilisera pour la définition des blocs thermoplastiques la caractéristique de température de transition vitreuse (Tg) du bloc rigide thermoplastique. Cette caractéristique est bien connue de l'homme du métier. Elle permet notamment de choisir la température de mise en oeuvre industrielle (transformation). Dans le cas d'un polymère (ou d'un bloc de polymère) amorphe, la température de mise en oeuvre est choisie sensiblement supérieure à la Tg du bloc thermoplastique. Dans le cas spécifique d'un polymère (ou d'un bloc de polymère) semi-cristallin, on peut observer une température de fusion alors supérieure à la température de transition vitreuse. Dans ce cas, c'est plutôt la température de fusion (Tf) qui permet de choisir la température de mise en oeuvre du polymère (ou bloc de polymère) considéré. Ainsi, par la suite, lorsqu'on parlera de « Tg (ou Tf, le cas échéant) », il faudra considérer qu'il s'agit de la température utilisée pour choisir la température de mise en oeuvre.

On peut aussi considérer la température de ramollissement des TPE. Cette température de ramollissement est proche de la température de mise en oeuvre. Pour la déterminer, on peut, par exemple, soumettre un échantillon à une contrainte de compression fixe, placer l'échantillon dans un four permettant de réaliser une rampe de température de l'ambiante à une température donnée, de l'ordre de la température maximale de cuisson (exemple : 180°C), avec une cinétique donnée pendant laquelle on enregistre la déformation de l'échantillon. Les résultats se présentent sous forme de courbe de déformation de l'échantillon en fonction de la température ; on considère usuellement la température de ramollissement comme celle pour laquelle le matériau présente une diminution de son épaisseur de 10%.

Pour les besoins de l'invention, les élastomères TPE comprennent un ou plusieurs bloc(s) thermoplastique(s) ayant de préférence une Tg (ou Tf, le cas échéant) supérieure ou égale à 60°C et constitué(s) à partir de monomères polymérisés. Préférentiellement, ce bloc thermoplastique a une Tg (ou Tf, le cas échéant) comprise dans un domaine variant de 60°C à 250°C. De préférence, la Tg (ou Tf, le cas échéant) de ce bloc thermoplastique est préférentiellement de 80°C à 200°C, plus préférentiellement de 100°C à 180°C.

La proportion des blocs thermoplastiques par rapport au TPE, tel que défini pour la mise en oeuvre de l'invention, est déterminée d'une part par les propriétés de thermoplasticité que doit présenter ledit copolymère. Les blocs thermoplastiques ayant une Tg (ou Tf, le cas échéant) supérieure ou égale à 60°C sont préférentiellement présents dans des proportions suffisantes pour préserver le caractère thermoplastique de l'élastomère selon l'invention. Le taux minimum de blocs thermoplastiques ayant une Tg (ou Tf, le cas échéant) supérieure ou égale à 60°C dans le TPE peut varier en fonction des conditions d'utilisation du copolymère. D'autre part, la capacité du TPE à se déformer lors de la préparation du pneu peut également contribuer à déterminer la proportion des blocs thermoplastiques ayant une Tg (ou Tf, le cas échéant) supérieure ou égale à 60°C.

Les blocs thermoplastiques ayant une Tg (ou Tf, le cas échéant) supérieure ou égale à 60°C peuvent être constitués à partir de monomères polymérisés de diverses natures, notamment, ils peuvent constituer les blocs suivants ou leurs mélanges :
- les polyoléfines (polyéthylène, polypropylène) ;
- les polyuréthannes ;
- les polyamides ;
- les polyesters ;
- les polyacétals ;
- les polyéthers (polyoxyde d'éthylène, polyphénylène éther) ;
- les polysulfures de phénylène ;
- les polyfluorés (FEP, PFA, ETFE) ;
- les polystyrènes (détaillés ci-dessous) ;
- les polycarbonates ;
- les polysulfones ;
- le polyméthylméthacrylate
- le polyétherimide
- les copolymères thermoplastiques tels que le copolymère acrylonitrile-butadiène-styrène (ABS).

Les blocs thermoplastiques ayant une Tg (ou Tf, le cas échéant) supérieure ou égale à 60°C peuvent aussi être obtenus à partir de monomères choisis parmi les composés suivants et leurs mélanges :
- l'acénaphthylène : l'homme de l'art pourra par exemple se référer à l'article de Z. Fodor et J.P. Kennedy, Polymer Bulletin 1992 29(6) 697-705 ;
- l'indène et ses dérivés tels que par exemple le 2-méthylindène, le 3-méthylindène, le 4-méthylindène, les diméthyl-indène, le 2-phénylindène, le 3-phénylindène et le 4-phénylindène ; l'homme de l'art pourra par exemple se référer au document de brevet US4946899, par les inventeurs Kennedy, Puskas, Kaszas et Hager et aux documents J. E. Puskas, G. Kaszas, J.P. Kennedy, W.G. Hager Journal of Polymer Science Part A : Polymer Chemistry (1992) 30, 41 et J.P. Kennedy, N. Meguriya, B. Keszler, Macromolecules (1991) 24(25), 6572-6577 ;
- l'isoprène, conduisant alors à la formation d'un certain nombre d'unités polyisoprène 1,4-trans et d'unités cyclisées selon un processus intramoléculaire ; l'homme de l'art pourra par exemple se référer aux documents G. Kaszas, J.E. Puskas, .P. Kennedy Applied Polymer Science (1990) 39(1) 119-144 et J.E. Puskas, G. Kaszas, J.P. Kennedy, Macromolecular Science, Chemistry A28 (1991) 65-80.

Les polystyrènes sont obtenus à partir de monomères styréniques. Par monomère styrénique doit être entendu dans la présente description tout monomère comprenant du styrène, non substitué comme substitué ; parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène), le para-tertio-butylstyrène, les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'o-bromostyrène, le m-bromostyrène, le p-bromostyrène, le 2,4-dibromostyrène, le 2,6-dibromostyrène ou les 2,4,6-tribromostyrène), les fluorostyrènes (par exemple l'o-fluorostyrène, le m-fluorostyrène, le p-fluorostyrène, le 2,4-difluorostyrène, le 2,6-difluorostyrène ou les 2,4,6-trifluorostyrène) ou encore le para-hydroxy-styrène.

Selon un mode de réalisation préférentiel de l'invention, le taux pondéral de styrène, dans l'élastomère TPE, est compris entre 5% et 50%. En dessous du minimum indiqué, le caractère thermoplastique de l'élastomère risque de diminuer de manière sensible tandis qu'au-dessus du maximum préconisé, l'élasticité de la couche adhésive peut être affectée. Pour ces raisons, le taux de styrène est plus préférentiellement compris entre 10% et 40%.

Selon une variante de l'invention, le monomère polymérisé tel que défini ci-dessus peut être copolymérisé avec au moins un autre monomère de manière à former un bloc thermoplastique ayant une Tg (ou Tf, le cas échéant) telle que définie ci-dessus.

À titre d'illustration, cet autre monomère susceptible de copolymériser avec le monomère polymérisé, peut être choisi parmi les monomères diènes, plus particulièrement, les monomères diènes conjugués ayant 4 à 14 atomes de carbone, et les monomères de type vinylaromatiques ayant de 8 à 20 atomes de carbone, tels qu'ils sont définis dans la partie concernant le bloc élastomère.

Selon l'invention, les blocs thermoplastiques du TPE présentent au total, une masse moléculaire moyenne en nombre ("Mn") allant de 5 000 g/mol à 150 000g/mol, de manière à conférer au TPE de bonnes propriétés élastomériques et une tenue mécanique suffisante et compatible avec l'utilisation comme couche adhésive pour la fixation d'un organe à la surface d'un pneumatique.

Le bloc thermoplastique peut également être constitué de plusieurs blocs thermoplastiques tels que définis ci-dessus.

### Exemples de TPE

Le TPE de la couche adhésive du pneumatique selon l'invention est un copolymère dont la partie élastomère est insaturée, et qui comporte des blocs diènes et avantageusement des blocs styrènes, ces blocs diènes étant en particulier des blocs isoprène ou butadiène. Plus préférentiellement, cet élastomère TPE est choisi dans le groupe suivant, constitué de copolymères dibloc, triblocs linéaires ou étoilés : styrène/ butadiène (SB), styrène/ isoprène (SI), styrène/ butadiène/ isoprène (SBI), styrène/ butadiène/ styrène (SBS), styrène/ isoprène/ styrène (SIS), styrène/ butadiène/ isoprène/ styrène (SBIS) et les mélanges de ces copolymères.

Par exemple également, le TPE est un copolymère linéaire ou étoilé dont la partie élastomère comporte une partie saturée et une partie insaturée comme par exemple le styrène/ butadiène/ butylène (SBB), le styrène/ butadiène/ butylène/ styrène (SBBS) ou un mélange de ces copolymères.

À titre d'exemples d'élastomères TPE commercialement disponibles, on peut citer les élastomères de type SIS commercialisés par Kuraray, sous le nom « Hybrar 5125 », ou commercialisés par Kraton sous le nom de « D1161 » ou encore les élastomères de type SBS linéaire commercialisé par Polimeri Europa sous la dénomination « Europrene SOLT 166 » ou SBS étoilé commercialisés par Kraton sous la dénomination « D1184 ». On peut également citer les élastomères commercialisés par la société Dexco Polymers sous la dénomination de « Vector » (e.g. « Vector 4114 », « Vector 8508 »).

### Film de protection

Le film de protection doit être un film flexible résistant à la chaleur qui doit en plus avoir une adhésion limitée à la couche adhésive pour pouvoir en être décollé. La force de pelage du film de la couche adhésive est de préférence inférieure à 1 N/mm à 20°C.

Ce film permet de protéger la surface de la couche adhésive lors des opérations d'assemblage du pneumatique et sa vulcanisation en moule.

Il peut notamment être un film thermoplastique. Ce film thermoplastique est avantageusement choisi dans le groupe des polyesters, des polyamides et des films comportant au moins un polymère fluoré. L'homme du métier saura choisir son épaisseur pour obtenir le meilleur compromis entre sa flexibilité et sa résistance mécanique. Cette épaisseur est avantageusement comprise entre 10 et 300 µm.

La nature du film de protection peut être incompatible avec celle du TPE de la couche adhésive pour obtenir une adhésion limitée appropriée.

Dans une utilisation préférentielle, ce film est retiré juste avant la mise en place de l'organe à la surface du pneumatique pour éviter toute pollution de la surface de la couche adhésive. Le film a alors l'avantage de protéger la couche adhésive pendant toutes les phases de transport et de stockage des pneumatiques.

De préférence, la Tg (ou Tf, le cas échéant) du film de protection est supérieure à la température de cuisson du mélange caoutchouteux de la zone d'accueil de la surface du pneumatique. Une température de 200°C permet au film de résister aux températures usuelles de vulcanisation des pneumatiques pour véhicules de tourisme.

Comme exemple de film polyester, on peut utiliser les films commercialisés sous la marque Mylar avec une épaisseur comprise entre 0,03 et 0,2 mm. Un tel film de polyester a une température de fusion supérieure à 230 °C.

On peut choisir comme polymères fluorés les copolymères éthylène-propylène fluoré (FEP). Avantageusement, le film comporte un copolymère de tétrafluoroéthylène (TFE) et d'hexafluoropropylène (HFP).

Ces polymères présentent de remarquables propriétés anti-collantes.

Un exemple de film adapté est le film A5000 de Aerovac Systèmes France. Ce film comporte un copolymère éthylène-propylène fluoré ou FEP. Ce film a une température maximale d'utilisation de l'ordre de 204 °C et a un allongement rupture supérieur à 300%. Son épaisseur est de 25 µm. Ces caractéristiques lui permettent d'être mis en place directement sur le tambour de confection du bandage pneumatique dans le cas spécifique de zone d'accueil placée à la surface de la gomme intérieure du pneumatique.

Le tableau suivant indique des exemples de films appropriés pour l'invention.

| Dénomination | Fournisseur | nature | épaisseur | T max | allongement |
|---|---|---|---|---|---|
| A5000 | Aerovac | FEP | 25 µm | 260 °C | > 300% |
| A6000 | Aerovac | ETFE | 12, 15 et 20 µm | 230 °C | > 200% |
| MR Film | Aerovac | PTFE | 25 µm | 315 °C | > 550 % |
| FEP100 | Dupont | FEP | 25 µm | 260 °C | > 300% |
| FEP100 | Dupont | FEP | 12.5 µm | 260 °C | > 300% |
| Norton FEP 0.001 | Saint Gobain | FEP | 25 µm | 260 °C | > 300% |
| Norton FEP 0.0005 | Saint Gobain | FEP | 12.5 µm | 260 °C | > 300% |
| Capran 526 | Aerovac | PA 6,6 | 50 µm | 232 °C | 300% |
| Capran 75 | Aerovac | PA 6 | 22 µm | | 375% |
| Dartek C917 | Dupont | PA 6,6 | 25 µm | | |
| A2500 | Aerovac | PMP | 30 µm | 200 °C | > 250% |

Le film de protection permet de séparer la couche adhésive de tout contact avec le tambour de fabrication du bandage pneumatique puis avec la membrane de cuisson du moule de vulcanisation. La nature incompatible du film de protection relativement à la couche adhésive lui permet d'être retiré de la surface intérieure du bandage pneumatique après la vulcanisation. Le retrait de ce film de protection redonne à la couche adhésive toutes ses propriétés. Le film de protection peut être enlevé sans se déchirer.

### Composition de la couche adhésive du pneumatique

La couche adhésive du pneumatique selon l'invention a pour caractéristique essentielle de comporter un élastomère thermoplastique à blocs (TPE).

Le terme « un » doit être entendu comme « au moins un », c'est-à-dire un ou plusieurs élastomères thermoplastiques à blocs. A titre d'exemple, il est avantageux d'utiliser un mélange de TPE dont l'un a une masse moléculaire en nombre Mn appropriée pour une bonne tenue en température et d'un TPE de faible masse Mn pour favoriser un bon collage entre les couches adhésive du pneumatique et de fixation de l'organe.

Un ou plusieurs élastomères TPE peuvent à eux seuls constituer une composition de couche adhésive du pneumatique.

À titre minoritaire, la composition de la couche adhésive peut comporter un élastomère diénique usuel tel un SBR, un polybutadiène ou un polyisoprène naturel ou synthétique. De façon très préférentielle, le taux d'élastomère diénique dans la composition est inférieur à 20 parties pour cent parties en masse d'élastomères de la composition (pce). Bien entendu, le ou les TPE de la composition sont pris en compte dans les élastomères de la composition.

De plus, selon un mode de réalisation préférentiel de l'invention, la composition de la couche adhésive peut comporter également, à titre d'agent plastifiant, une huile d'extension (ou huile plastifiante) dont la fonction est de faciliter la mise en joint de la couche adhésive et de la couche de fixation de l'organe, particulièrement par un abaissement du module et une augmentation du pouvoir tackifiant.

On peut utiliser toute huile d'extension, à caractère faiblement polaire, apte à étendre, plastifier des élastomères, notamment thermoplastiques. À température ambiante (23°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides.

De préférence, l'huile d'extension est choisie dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité), les huiles aromatiques, les huiles minérales, et les mélanges de ces huiles. L'homme du métier saura ajuster la nature et la quantité d'huile d'extension en fonction des conditions particulières d'usage de la couche adhésive.

On utilise préférentiellement une huile du type caoutchouc isoprénique liquide (« LIR »). A titre d'exemple, les LIR 30 et 50, respectivement de masses moléculaires moyenne en nombre de 30 000 et 50 000 g/mol sont commercialisées par Kuraray.

La composition de la couche adhésive peut comporter par ailleurs les divers additifs usuellement présents dans les compositions à base d'élastomères thermoplastiques à blocs connues de l'homme du métier. On citera par exemple des charges renforçantes telles que du noir de carbone ou de la silice, des charges non renforçantes ou inertes ou encore fibrillaires, des agents colorants avantageusement utilisables pour la coloration de la composition, des plastifiants autres que les huiles d'extension précitées, des résines tackifiantes, des agents de protection tels que antioxydants ou antiozonants, anti-UV, divers agents de mise en oeuvre ou autres stabilisants, ou encore des promoteurs aptes à favoriser l'adhésion au reste de la structure de l'objet pneumatique.

L'usage de résines tackifiantes peut être particulièrement intéressant pour régler les températures de ramollissement ainsi que les niveaux d'adhésion nécessaires des couches adhésives ou de fixation.

### Composition de la couche de fixation de l'organe

La composition de la couche de fixation de l'organe comporte un ou plusieurs élastomères thermoplastiques à blocs choisis de telle sorte que la force d'adhésion, c'est-à-dire la force nécessaire pour séparer les deux couches adhésive et de fixation dans un test de pelage est supérieure à 2 N/mm à 60°C.

Selon un mode de réalisation préférentiel, les blocs thermoplastiques des TPE des couches de fixation et adhésive sont compatibles (c'est-à-dire similaire du fait de leurs masses, de leurs polarités ou de leurs Tg) avec les blocs thermoplastiques du ou des élastomères thermoplastiques à blocs de la composition de la couche adhésive du pneumatique.

Le ou les TPE de la couche de fixation de l'organe peuvent comporter des blocs élastomères insaturés comme celui ou ceux de la couche adhésive du pneumatique. Mais, il peuvent aussi comporter des blocs élastomères insaturés comme précédemment décrit.

Selon un mode de réalisation préférentiel, les blocs thermoplastiques du ou des élastomères thermoplastiques à blocs de la composition de la couche de fixation de l'organe sont identiques aux blocs thermoplastiques du ou des TPE de la composition de la couche adhésive du pneumatique.

Selon un mode de réalisation très préférentiels, les TPE majoritaires des couches de fixation et adhésive sont identiques.

La composition de la couche de fixation de l'organe peut aussi comporter des élastomères diéniques saturés ou insaturés, à titre minoritaire, des huiles ou des additifs divers tels que précédemment décrits.

### Description des Figures

Des éléments complémentaires de l'invention sont maintenant décrits avec l'aide du dessin annexé, présenté à titre non limitatif, dans lequel :
- la figure 1 représente de manière très schématique (sans respect d'une échelle spécifique), une coupe radiale d'un pneumatique conforme à un mode de réalisation de l'invention ;
- la figure 2 présente en coupe radiale partielle une ébauche de pneumatique conforme à un mode de réalisation de l'invention ;
- la figure 3 illustre un organe avec une couche de fixation ; et
- la figure 4 montre l'organe fixé à la surface du pneumatique.

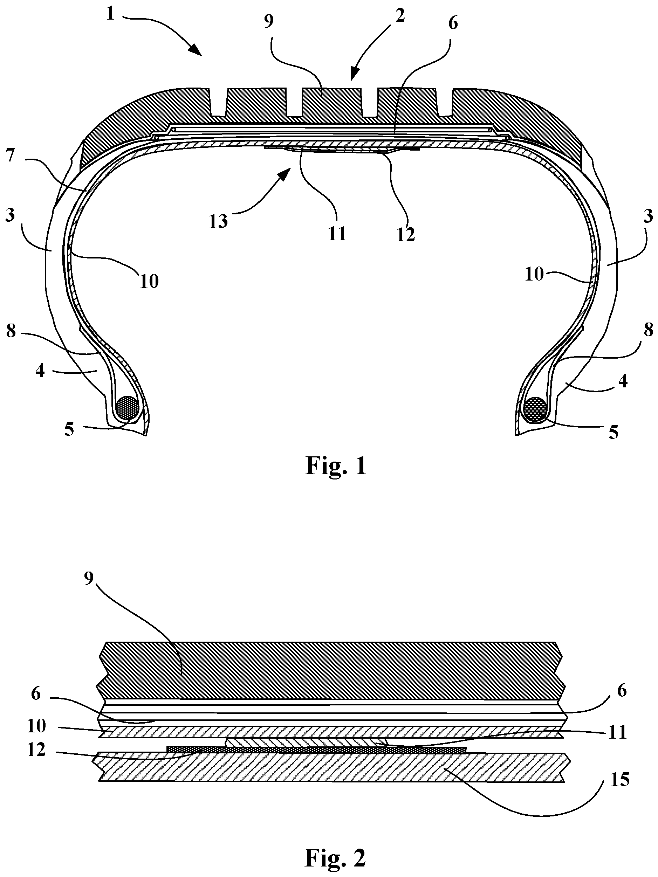

La figure 1 représente de manière schématique une coupe radiale d'un bandage pneumatique ou pneumatique incorporant à une zone d'accueil 13 donnée une couche adhésive avec un film de protection selon un mode de réalisation de l'invention.

Ce pneumatique 1 comporte un sommet 2 renforcé par une armature de sommet ou ceinture 6, deux flancs 3 et deux bourrelets 4, chacun de ces bourrelets 4 étant renforcé avec une tringle 5. L'armature de sommet 6 est surmontée radialement extérieurement d'une bande de roulement caoutchouteuse 9. Une armature de carcasse 7 est enroulée autour des deux tringles 5 dans chaque bourrelet 4, le retournement 8 de cette armature 7 étant par exemple disposé vers l'extérieur du pneumatique 1. L'armature de carcasse 7 est de manière connue en soi constituée d'au moins une nappe renforcée par des câbles dits « radiaux », par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6). Une couche étanche 10 s'étend d'un bourrelet à l'autre radialement intérieurement relativement à l'armature de carcasse 7.

Le pneumatique 1 est tel que sa paroi interne comporte dans une zone d'accueil 13 donnée une couche adhésive 11. La couche adhésive 11 est recouverte radialement intérieurement par un film de protection 12. L'épaisseur de la couche adhésive est de préférence comprise entre 0,1 et 4 mm, et très préférentiellement entre 0,2 et 2 mm. L'homme de l'art saura adapter cette épaisseur en fonction de la nature, de la géométrie et de la masse de l'organe ainsi que de l'épaisseur de la couche de fixation de l'organe.

La surface de la zone d'accueil 13 et donc de la couche adhésive 11 doit être suffisante pour obtenir une fixation robuste de l'organe, l'homme du métier saura ajuster la dimension de la couche adhésive en fonction de la taille et de la masse de l'organe à fixer.

La couche adhésive 11 est constituée d'un copolymère majoritairement triblocs styrène/ isoprène/ styrène SIS de grade D1161 de chez Kraton.

Le film de protection séparable 12 est un film thermoplastique comportant à titre d'exemple un polymère fluoré. Le film thermoplastique est extensible avec une faible rigidité et a un comportement plastique. Ce film doit avoir une Tg (ou Tf, le cas échéant) supérieure à la température de vulcanisation du bandage pneumatique. Un exemple de film adapté est le film A5000 de Aerovac Systèmes France. Ce film comporte un copolymère éthylène-propylène fluoré ou FEP. Ce film a une température maximale d'utilisation de l'ordre de 204 °C et a un allongement rupture supérieur à 300%. Son épaisseur est de 25 µm. Ces caractéristiques lui permettent, dans un exemple de réalisation de l'invention, d'être mis en place directement soit sur le tambour de confection du bandage pneumatique.

Comme l'indique la figure 2, le film de protection 12 déborde de la zone d'accueil de la couche adhésive. Le débordement doit être supérieur à 2 mm pour garantir la non-contamination de cette couche adhésive pendant la vulcanisation du pneumatique.

Le film de protection séparable 12 permet de séparer la couche adhésive de tout contact avec le tambour de fabrication du pneumatique puis avec la membrane de cuisson du moule de vulcanisation. La nature particulière de ce film de protection lui permet d'être retiré de la surface intérieure du pneumatique après la vulcanisation. Le retrait de ce film de protection redonne à la surface de la couche adhésive toutes ses propriétés. Le film de protection 12 peut être enlevé sans se déchirer.

Le bandage pneumatique de la figure 1 peut être fabriqué, comme l'indique la figure 2, en intégrant la couche adhésive dans une ébauche non vulcanisée de pneumatique 1 en utilisant un tambour de fabrication et les autres techniques usuelles dans la fabrication des bandages pneumatiques. Plus précisément, le film de protection séparable 12 disposé radialement le plus à l'intérieur est appliqué en premier sur le tambour de fabrication 15. On met en place ensuite la couche adhésive 11.On applique ensuite, successivement, tous les autres composants usuels du bandage pneumatique.

Après la conformation, les nappes sommet et la bande de roulement sont mises en place sur l'ébauche du pneumatique. L'ébauche ainsi achevée est placée dans un moule de cuisson et est vulcanisée. Pendant la vulcanisation, le film de protection protège la membrane de cuisson du moule de tout contact avec la couche adhésive.

À la sortie du moule de cuisson, le film de protection 12 est toujours attaché à la couche adhésive 11.

Le film de protection 12 peut être aisément retiré à la sortie du moule de vulcanisation du pneumatique. Il est aussi possible, et préférable, de laisser en place ce film de protection jusqu'au moment de la fixation de l'organe.

Le film de protection et la couche adhésive peuvent aussi être appliqués à la zone d'accueil choisie à la surface du pneumatique après la conformation de l'ébauche de pneumatique et avant l'introduction de celle-ci dans le moule de vulcanisation.

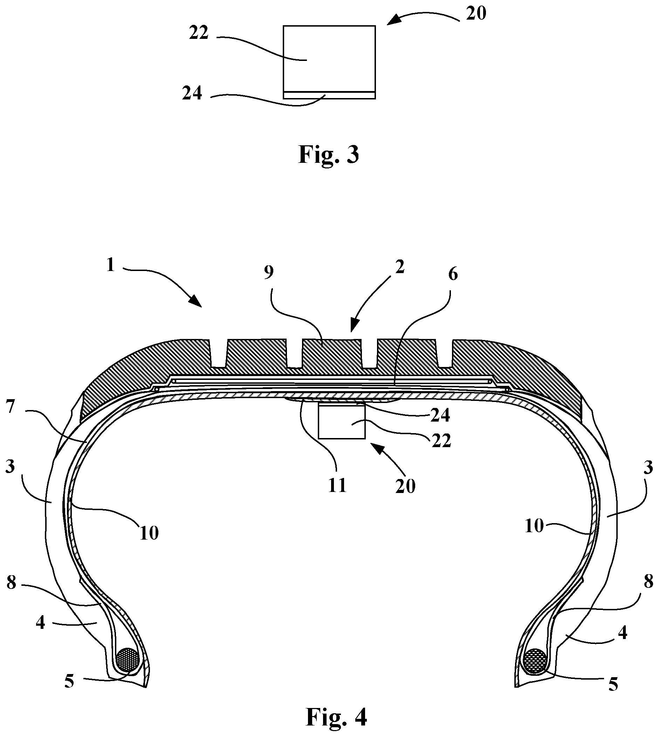

La figure 3 présente schématiquement un organe 20 comportant un boîtier 22 et une couche de fixation 24. Le matériau de la couche de fixation 24 est à base d'un élastomère thermoplastique à blocs dont les blocs thermoplastiques rigides sont de même nature que les blocs rigides du ou des TPE de la couche adhésive du pneumatique. La couche de fixation est préférentiellement à base du même TPE que celui de la couche adhésive. Les couches d'adhésion et de fixation sont constituées d'un TPE majoritairement triblocs à base de styrène et d'isoprène (SIS). L'épaisseur de la couche de fixation est de préférence entre 0,5 et 4 mm, et très préférentiellement entre 2 et 3 mm. L'homme de l'art saura adapter l'épaisseur de la couche de fixation en fonction de celle de la couche adhésive et de la taille et de la masse de l'organe.

La figure 4 présente l'ensemble du pneumatique de la figure 1 et de l'organe 20 fixé sur sa surface intérieure sur la gomme intérieure.

La fixation de l'organe 20 à la surface du pneumatique est réalisée aisément et rapidement :
- on retire tout ou partie du film de protection 12 de la couche adhésive 11 du pneumatique 1 ;
- on échauffe les couches d'adhésion 11 du pneumatique et de fixation 24 de l'organe jusqu'à des températures supérieures aux Tg (ou Tf, le cas échéant) de ces élastomères thermoplastiques à blocs ; ce chauffage peut être réalisé par tout moyen (soufflage d'air chaud, rayonnement infra-rouge...) ; les zones superficielles des deux couches d'adhésion et de fixation sont alors au-delà de leurs températures de mise en oeuvre et sont ainsi ramollies ;
- on met en contact la couche de fixation et la couche adhésive en appliquant une pression de contact ; cette mise en contact permet aux deux couches de s'interpénétrer en raison de la forte mobilité moléculaire liée à la température ; et
- on maintient le contact jusqu'au refroidissement des deux couches d'adhésion et de fixation en dessous des Tg (ou Tf le cas échéant) des TPE.

La pression de contact est de préférence supérieure à 0,05 bar. L'homme de l'art saura l'ajuster en fonction des couches de fixation et adhésive utilisées.

Dès que le refroidissement est effectif, l'organe est fixé de façon robuste à la surface du pneumatique.

Les exemples présentés, l'organe est fixé à la surface interne du pneumatique, il est aussi possible de le placer sur une surface externe du pneumatique par exemple sur le flanc du pneumatique.

### Tests

### Test de pelage manuel

Des tests d'adhésion (tests de pelage) ont été conduits pour tester l'aptitude de la couche adhésive à adhérer après cuisson à une couche d'élastomère diénique, plus précisément à une composition de caoutchouc usuelle pour une gomme intérieure (inner liner) de pneumatique, à base de caoutchouc butyle (copolymère d'isobutylène et d'isoprène) comportant en outre les additifs usuels (charge, soufre, accélérateur, ZnO, acide stéarique, antioxydant). Bien entendu, ce test peut être adapté au cas où l'organe doit être placé sur le flanc du pneumatique, dans ce cas, on utilisera pour réaliser les éprouvettes une couche de mélange caoutchouteux de flanc au lieu d'une couche de gomme intérieure usuelle.

Les éprouvettes de pelage (du type pelage à 180°) ont été réalisées par empilage d'une part d'un tissu de type nappe carcasse tourisme et d'une couche adhésive en SIS (1,5 mm), et d'autre part d'un tissu identique et d'une couche de gomme intérieure usuelle (1,2 mm) ou d'une couche adhésive en SIS. Chaque partie est confectionnée séparément à 180°C pendant 15 min dans une presse à plateaux.

L'assemblage de ces deux parties est ensuite réalisé en mettant en contact la surface du SIS et la surface de la gomme intérieure sous pression de 0,1 bar pendant 1 min et à 180°C. Une amorce de rupture est insérée entre les deux tissus calandrés en extrémité de la couche adhésive.

Des bandes de 30 mm de largeur ont été découpées au massicot. Les deux côtés de l'amorce de rupture ont été ensuite placées dans les mors d'une machine de traction de marque Instron® Les essais sont réalisés à température ambiante et à une vitesse de traction de 100 mm/min. On enregistre les efforts de traction et on norme ceux-ci par la largeur de l'éprouvette. On obtient une courbe de force par unité de largeur (en N/mm) en fonction du déplacement de traverse mobile de la machine de traction (entre 0 et 200 mm). La valeur d'adhésion retenue correspond à l'initiation de la rupture au sein de l'éprouvette et donc à la valeur maximale de cette courbe.

Exemples : C-1 est une composition usuelle de gomme intérieure ; C-2 est une couche adhésive conforme à l'invention ; C-3 est une couche de fixation conforme à l'invention.

**Tableau 1**

| Composition | C-1 | C-2 | C-3 |
|---|---|---|---|
| Élastomère butyl (1) | 100 | | |
| Noir de carbone (N772) | 50 | | |
| Oxyde de zinc | 1,5 | | |
| Acide stéarique | 1,5 | | |
| Sulfénamide (2) | 1,2 | | |
| Soufre | 1,5 | | |
| SIS " Kraton D1161" | | 100 | 100 |

| | | | |
|---|---|---|---|
| (1) polyisobutylène bromé « BROMOBUTYL 2222 » commercialisé par la société EXXON CHEMICAL Co ; (2) N-dicyclohexyl-2-benzothiazol-sulfénamide ("Santocure CBS" de la société Flexsys). | | | |

### Résultats des tests

La valeur d'adhésion de C-2 sur C-3 obtenue est multipliée par 13 par rapport à la valeur d'adhésion de C-2 sur C-1.

**Tableau 2**

| Évaluation de l'adhésion entre les surfaces | C-2 sur C-1 | C-2 sur C-3 |
|---|---|---|
| Valeurs d'adhésion (N/mm) | 0.3 | 4 |

L'invention permet ainsi une fixation rapide et réversible d'organes à la surface d'un pneumatique sans les inconvénients liés à la préparation de la surface de contact.

Cette fixation est réversible, c'est-à-dire que les deux couches adhésive et de fixation peuvent être désassemblées par chauffage au-dessus des Tg de leurs blocs rigides (ou Tf le cas échéant) puis passage d'un outil. La couche adhésive ainsi révélée peut ensuite être à nouveau utilisée pour coller le même organe ou un autre.

Les solutions de collage développées sont respectueuses de l'environnement et n'utilisent pas de réticulation chimique irréversible

Enfin, ce mode de fixation procure une grande liberté quant à la géométrie et les fonctions de l'organe du fait de la fixation post vulcanisation.

## Revendications

1. Pneumatique comportant une surface intérieure et/ou extérieure avec une zone d'accueil, une couche adhésive disposée sur ladite zone d'accueil et un film de protection disposé sur ladite couche adhésive, **caractérisé en ce que** la composition de ladite couche adhésive est à base d'un élastomère thermoplastique à blocs (TPE) comportant un bloc élastomère diénique avec un taux molaire de motifs diéniques relativement à l'ensemble des motifs du bloc élastomère supérieur à 10%.

2. Pneumatique selon la revendication 1, dans lequel le taux molaire de motifs diéniques du bloc élastomère de la composition de la couche adhésive relativement à l'ensemble des motifs du bloc élastomère est supérieur à 50%.

3. Pneumatique selon l'une des revendications 1 et 2, dans lequel le diène du bloc élastomère est choisi dans les diènes conjugués en C4-C12.

4. Pneumatique selon l'une quelconque des revendications précédentes, dans lequel le bloc élastomère est un copolymère obtenu par copolymérisation d'un ou plusieurs diènes conjugués entre eux ou avec un ou plusieurs composés vinyle aromatique ayant de 8 à 20 atomes de carbone.

5. Pneumatique selon l'une quelconque des revendications précédentes, dans lequel le bloc élastomère est à base d'isoprène.

6. Pneumatique selon l'une quelconque des revendications précédentes, dans lequel le bloc thermoplastique de l'élastomère thermoplastique à blocs de la composition de la couche adhésive est un bloc styrénique.

7. Pneumatique selon l'une quelconque des revendications précédentes, dans lequel le ou les élastomères thermoplastiques à blocs de la composition de la couche adhésive sont les seuls élastomères de ladite composition de la couche adhésive.

8. Pneumatique selon l'une quelconque des revendications précédentes, dans lequel le film de protection est un film thermoplastique choisi de telle sorte que la force de pelage dudit film de la couche adhésive est inférieure à 1 N/mm à 20°C.

9. Pneumatique selon la revendication 8, dans lequel le film de protection est choisi dans le groupe des polyesters, des polyamides et des films comportant au moins un polymère fluoré.

10. Pneumatique selon l'une quelconque des revendications précédentes, dans lequel la Tg (ou Tf, le cas échéant) du film de protection est supérieure à la température maximale de cuisson du mélange caoutchouteux de la zone d'accueil.

11. Organe destiné à être fixé à la surface d'un pneumatique selon l'une quelconque des revendications précédentes, **caractérisé en ce que** ledit organe comprend une couche de fixation dont la composition est à base d'un élastomère thermoplastique à blocs dont le bloc thermoplastique est de même nature que le bloc thermoplastique dudit élastomère thermoplastique à blocs de la composition de la couche adhésive de la zone d'accueil dudit pneumatique.

12. Organe selon la revendication 11, tel que ledit organe est un boîtier apte à recevoir un dispositif électronique.

13. Organe selon la revendication 11, tel que ledit organe est un dispositif électronique.

14. Ensemble d'un pneumatique selon l'une quelconque des revendications 1 à 10 et d'un organe selon l'une quelconque des revendications 11 à 13.

15. Procédé de fixation d'un organe selon l'une quelconque des revendications 11 à 13 à la surface d'un pneumatique selon l'une quelconque des revendications 1 à 10, dans lequel :
- on retire tout ou partie du film de protection ;
- on porte lesdites couche adhésive et couche de fixation à une température supérieure aux températures de ramollissement desdits blocs thermoplastiques desdits élastomères thermoplastiques à blocs ; et
- on met en contact en appliquant une pression la couche de fixation et la couche adhésive.

## Patentansprüche

1. Reifen, umfassend eine Innenfläche und/oder Außenfläche mit einem Aufnahmebereich, eine Klebeschicht, die auf dem Aufnahmebereich angeordnet ist, und eine Schutzfolie, die auf der Klebeschicht angeordnet ist, **dadurch gekennzeichnet, dass** die Zusammensetzung der Klebeschicht auf Basis eines thermoplastischen Blockelastomers (TPE) ist, umfassend ein Block-Dien-Elastomer mit einem Molverhältnis von Dien-Einheiten gegenüber der Gesamtheit der Einheiten des Elastomerblocks von über 10 %.

2. Reifen nach Anspruch 1, wobei das Molverhältnis von Dien-Einheiten des Elastomerblocks der Zusammensetzung der Klebeschicht gegenüber der Gesamtheit der Einheiten des Elastomerblocks größer als 50 % ist.

3. Reifen nach einem der Ansprüche 1 und 2, wobei das Dien des Elastomerblocks ausgewählt ist aus den konjugierten C4-C12-Dienen.

4. Reifen nach einem der vorhergehenden Ansprüche, wobei der Elastomerblock ein Copolymer ist, das durch Copolymerisation von einem oder mehreren konjugierten Dienen miteinander oder mit einer oder mehreren vinylaromatischen Verbindungen mit 8 bis 20 Kohlenstoffatomen erhalten ist.

5. Reifen nach einem der vorhergehenden Ansprüche, wobei der Elastomerblock auf Isopren-Basis ist.

6. Reifen nach einem der vorhergehenden Ansprüche, wobei der Elastomerblock des thermoplastischen Blockelastomers der Zusammensetzung der Klebeschicht ein Styrolblock ist.

7. Reifen nach einem der vorhergehenden Ansprüche, wobei der oder die thermoplastischen Blockelastomere der Zusammensetzung der Klebeschicht die einzigen Elastomere der Zusammensetzung der Klebeschicht sind.

8. Reifen nach einem der vorhergehenden Ansprüche, wobei die Schutzfolie eine thermoplastische Folie ist, die derart ausgewählt ist, dass die Schälkraft der Folie der Klebeschicht bei 20 °C niedriger als 1 N/mm ist.

9. Reifen nach Anspruch 8, wobei die Schutzfolie ausgewählt ist aus der Gruppe der Polyester, der Polyamide und der Folien, die mindestens ein Fluorpolymer umfassen.

10. Reifen nach einem der vorhergehenden Ansprüche, wobei die Tg (oder gegebenenfalls Tf) der Schutzfolie höher ist als die maximale Brenntemperatur der Kautschukmischung des Aufnahmebereichs.

11. Organ, das dazu bestimmt ist, auf der Oberfläche eines Reifens nach einem der vorhergehenden Ansprüche befestigt zu werden, **dadurch gekennzeichnet, dass** das Organ eine Befestigungsschicht aufweist, deren Zusammensetzung auf Basis eines thermoplastischen Blockelastomers ist, dessen Zusammensetzung von der gleichen Beschaffenheit ist wie der Elastomerblock des thermoplastischen Blockelastomers der Zusammensetzung der Klebeschicht des Aufnahmebereichs des Reifens.

12. Organ nach Anspruch 11, derart, dass das Organ ein Gehäuse ist, das geeignet ist, eine elektronische Vorrichtung aufzunehmen.

13. Organ nach Anspruch 11, derart, dass das Organ eine elektronische Vorrichtung ist.

14. Anordnung eines Reifens nach einem der Ansprüche 1 bis 10 und eines Organs nach einem der Ansprüche 11 bis 13.

15. Befestigungsverfahren eines Organs nach einem der Ansprüche 11 bis 13 an der Oberfläche eines Reifens nach einem der Ansprüche 1 bis 10, wobei:
- die ganze oder ein Teil der Schutzfolie abgezogen wird,
- die Klebeschicht und die Befestigungsschicht auf eine Temperatur gebracht werden, die höher ist als die Erweichungstemperaturen der thermoplastischen Blöcke der thermoplastischen Blockelastomere und
- die Befestigungsschicht und die Klebeschicht durch Aufbringen eines Drucks in Kontakt gebracht werden.

## Claims

1. Tyre comprising an inner surface and/or outer surface with an accommodating region, an adhesive layer arranged on said accommodating region and a protective film arranged on said adhesive layer, **characterized in that** the composition of said adhesive layer is based on a block thermoplastic elastomer (TPE) comprising a diene elastomer block with a molar content of diene units relative to all of the units of the elastomer block of greater than 10%.

2. Tyre according to Claim 1, in which the molar content of diene units of the elastomer block of the composition of the adhesive layer relative to all of the units of the elastomer block is greater than 50%.

3. Tyre according to either of Claims 1 and 2, in which the diene of the elastomer block is selected from the C4-C12 conjugated dienes.

4. Tyre according to any one of the preceding claims, in which the elastomer block is a copolymer obtained by copolymerization of one or more conjugated dienes with one another or with one or more vinylaromatic compounds having from 8 to 20 carbon atoms.

5. Tyre according to any one of the preceding claims, in which the elastomer block is based on isoprene.

6. Tyre according to any one of the preceding claims, in which the thermoplastic block of the block thermoplastic elastomer of the composition of the adhesive layer is a styrene block.

7. Tyre according to any one of the preceding claims, in which the block thermoplastic elastomer(s) of the composition of the adhesive layer are the only elastomers of said composition of the adhesive layer.

8. Tyre according to any one of the preceding claims, in which the protective film is a thermoplastic film selected such that the peel force of said film from the adhesive layer is less than 1 N/mm at 20°C.

9. Tyre according to Claim 8, in which the protective film is selected from the group consisting of polyesters, polyamides and films comprising at least one fluoropolymer.

10. Tyre according to any one of the preceding claims, in which the Tg (or M.p., if appropriate) of the protective film is greater than the maximum curing temperature of the rubber mixture of the accommodating region.

11. Member intended to be fixed to the surface of a tyre according to any one of the preceding claims, **characterized in that** said member comprises an attachment layer, the composition of which is based on a block thermoplastic elastomer, the thermoplastic block of which is of the same nature as the thermoplastic block of said block thermoplastic elastomer of the composition of the adhesive layer of the accommodating region of said tyre.

12. Member according to Claim 11, such that said member is a casing able to receive an electronic device.

13. Member according to Claim 11, such that said member is an electronic device.

14. Assembly of a tyre according to any one of Claims 1 to 10 and of a member according to any one of Claims 11 to 13.

15. Method for attaching a member according to any one of Claims 11 to 13 to the surface of a tyre according to any one of Claims 1 to 10, in which:
- all or a portion of the protective film is removed;
- said adhesive layer and said attachment layer are brought to a temperature greater than the softening points of said thermoplastic blocks of said block thermoplastic elastomers; and
- the attachment layer and the adhesive layer are brought into contact by applying pressure thereto.
